# EUROPEAN PATENT SPECIFICATION

(11) **EP 0 798 163 B1**
(45) Date of publication and mention of the grant of the patent: **24.10.2001**
(21) Application number: 97301664.5
(22) Date of filing: 12.03.1997
(51) Int. Cl.: B60R 1/06

(54) **Exterior rearview mirror for a vehicle**
Fahrzeug-Aussenspiegel
Rétroviseur extérieur de véhicule

(30) Priority: 27.03.1996 GB 9606461
(43) Date of publication of application: 01.10.1997
(73) Proprietor: BRITAX (GECO) S.A., F-77981 St. Fargeau-Ponthierry Cédex (FR)
(72) Inventor: Beuzeville, Xavier, 77820 Chatelet En Brie (FR); Therville, Jan Luc, 77630 Arbonne la Foret (FR); Legrand Gerald, 77120 Coulomniers (FR)
(74) Representative: Price, Nigel John King

(56) References cited:
- EP-A- 0 545 197
- EP-A- 0 686 524
- US-A- 4 981 349

## Description

This invention relates to an exterior rearview mirror for a vehicle of the type comprising a base member adapted to be secured to a vehicle body, a mirror housing mounted on the base member for angular movement about a substantially vertical axis between a position of normal use and a position in which the distance by which the mirror housing projects from the vehicle body is reduced, means for holding the mirror housing in its normal position, an electric motor and transmission means powered by the electric motor having two drive couplings connected fast with the mirror housing and the base member respectively for causing relative angular movement therebetween.

A rearview mirror according to the preamble of claim 1 is known from US-A-4 981 349.

According to the invention, in an exterior rearview mirror of the type described above, a first one of said two drive couplings comprises a support member, a second one of said two drive couplings comprises a first driven member connectable by first clutch means to the support member, a second driven member is connectable by second clutch means to the support member, a resilient detent is arranged to resist displacement of the first driven member in a first direction from a predetermined orientation relative to the support member corresponding to said position of normal use, and the electric motor is coupled to drive means operative to cause relative angular movement about said vertical axis between the second driven member and the first driven member, the force necessary to cause slippage of the second clutch means being greater than the force necessary to cause slippage of the first clutch means and less than the force necessary to disengage said resilient detent.

An embodiment of the invention will now be described, by wide example, with reference to the accompanying drawings in which:
Figure 1 is a plan view of an exterior rear view mirror in accordance with the invention for fitting to the left hand door of a motor car, with the mirror housing in its normal driving position, and with part of the case of the mirror housing broken away to show a housing of an adjustment mechanism for changing the orientation of the mirror housing relative to the vehicle;
Figure 2 is a plan view of the adjustment mechanism shown in Figure 1, with the cover of the mechanism housing removed;
Figure 3 is a cross-sectional view taken on the line 3-3 in Figure 2;
Figure 4 is a cross-sectional view taken on the line 4-4 in Figure 3;
Figure 5 is a scrap cross-sectional view taken on the arcuate line 5-5 in Figure 4; and
Figure 6 is a circuit diagram of an electrical circuit incorporated into the mechanism shown in Figures 1 to 5;
Figure 7 is a circuit diagram, similar to Figure 6 but actuated to displace the mirror housing to a parked position;
Figures 8 and 9 are sectional views similar to Figures 4 and 5, respectively, showing the mechanism with the mirror housing in the parked position;
Figure 10 is a circuit diagram similar to Figure 6 but actuate to restore the mirror housing from its parked position to its normal position;
Figures 11 and 12 are cross-sectional views, similar to Figures 4 and 5 but showing the mechanism with the mirror housing displaced forwardly from its normal position, for example as a result of an impact;
Figure 13 is a circuit diagram similar to Figure 6 but with actuated to correspond to Figures 11 and 12;
Figure 14 is a circuit diagram similar to Figure 6 but actuated to restore the mirror housing from its forwardly displaced position to its normal position;
Figures 15 and 16 are cross-sectional views, similar to Figures 4 and 5 but showing the mechanism during an initial phase of restoration from forward displacement to its normal position; and
Figures 17 and 18 are cross-sectional views similar to Figures 4 and 5 but showing the mechanism in a position just prior to completion of restoration of the mirror housing from a forwardly displaced position to its normal position.

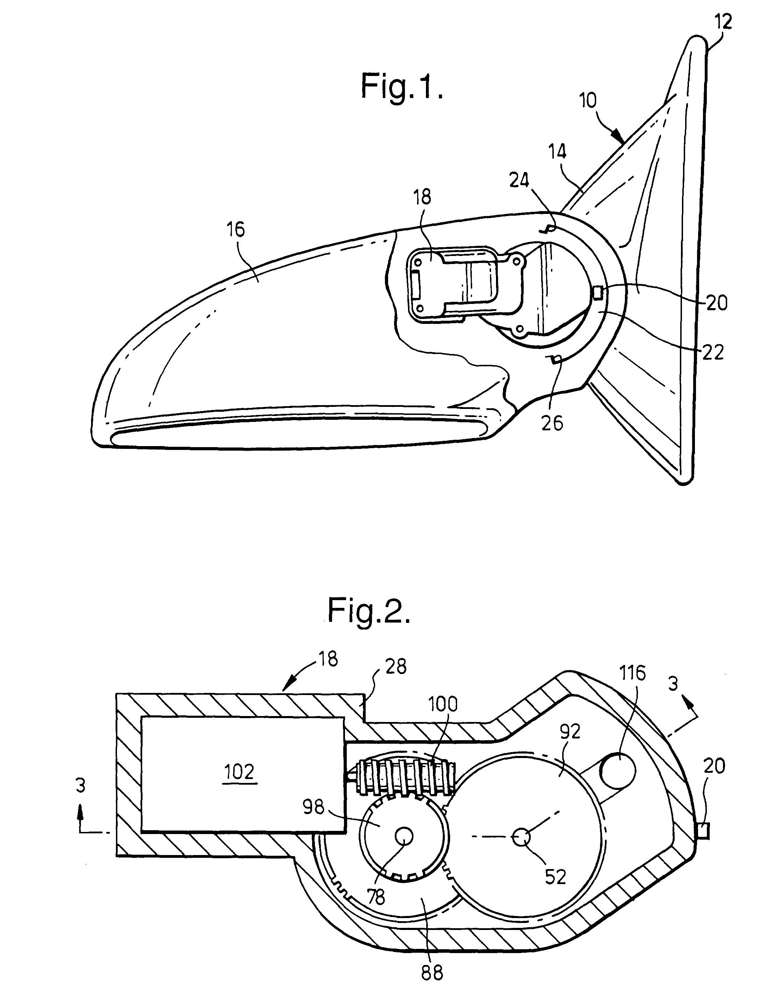

Referring to Figure 1, an exterior mirror has a base member 10 with a mounting surface 12 on one side, for attachment to the left hand front door of a motor car, and a platform 14 projecting laterally from an opposite side. A mirror housing 16 is mounted on the platform 14 by a pivotal mounting which allows relative angular movement about a vertical axis, as will be described hereinafter.

The housing 16 is shown broken away in Figure 1 to reveal a drive unit 18 to which the housing 16 is secured. The drive unit 18 has an external finger 20 which engages in an arcuate channel 22 in the base member 10, the ends of such channel 22 serving as stops 24 and 26 to limit the range of angular movement of the housing 16.

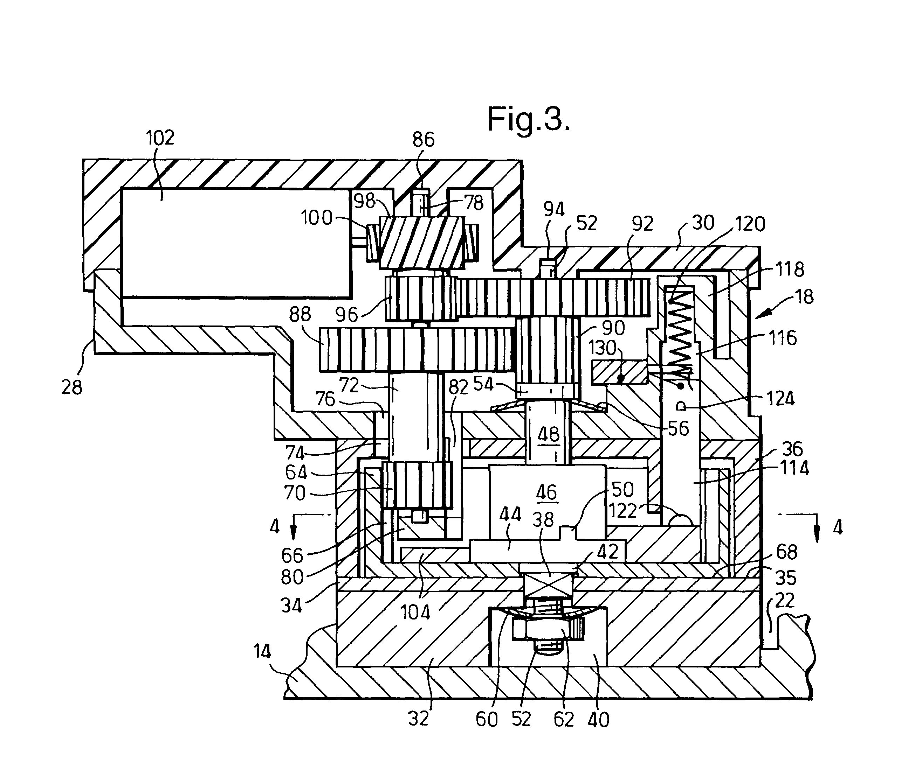

Referring to Figures 2 and 3, the drive unit 18 is enclosed in a two-part drive housing comprising a drive housing body 28 and a drive lid 30. A cylindrical support member 32 is mounted on the platform 14 and has a clutch disc 34 secured to its upper surface. The upper surface of the clutch disc 34 is frictionally engaged by the annular bottom surface 35 of a cylindrical clutch member 36 which is secured to the bottom surface of the drive housing body 28.

A generally cylindrical centering bush projects coaxially upwardly from the cylindrical support member 32 and has a square cross-section bottom zone 38, which is a sliding fit in respective correspondingly shaped holes in the clutch disc 34 and the support member 32. The square cross-section hole in the support member 32 leads to an enlarged recess 40 in the bottom surface thereof.

Above the bottom zone 38, the centering bush 42, 44, 46 has a small-diameter lower cylindrical zone 42, then a cylindrical flange 44, then a large-diameter intermediate cylindrical zone 46 (of smaller diameter than the flange 44), and finally a small-diameter upper cylindrical zone 48 (of diameter between that of the bottom cylindrical zone 42 and that of the intermediate zone 46). An arcuate projection 50 is formed on the upper surface of the flange 44 so as to extend radially outwardly from the lower part of the intermediate zone 46 for about 30°. The upper zone 48 of the centering bush is a sliding fit in aligned holes in the top part of the clutch member 36 and the bottom of the drive housing body 28 respectively.

A coupling pin 52, having a threaded bottom end, is a sliding fit in an axial hole in the centering bush. The pin 52 has a flange 54 above the upper end of the upper cylindrical zone 48 of the centering bush. A first Belleville washer 56 engages between the flange 54 and the inner surface of the bottom of the drive housing body 28. A second Belleville washer 60 engages between the inner surface of the recess 40 and a nut 62 which is screwed on to the threaded bottom end of the pin 52. The pin 52 is keyed to the centering bush so as to allow the nut 62 to be tightened. The force exerted by the two Belleville washers 56 and 60 has the effect of urging the annular bottom surface of the cylindrical clutch member 36 into engagement with the clutch disc 34.

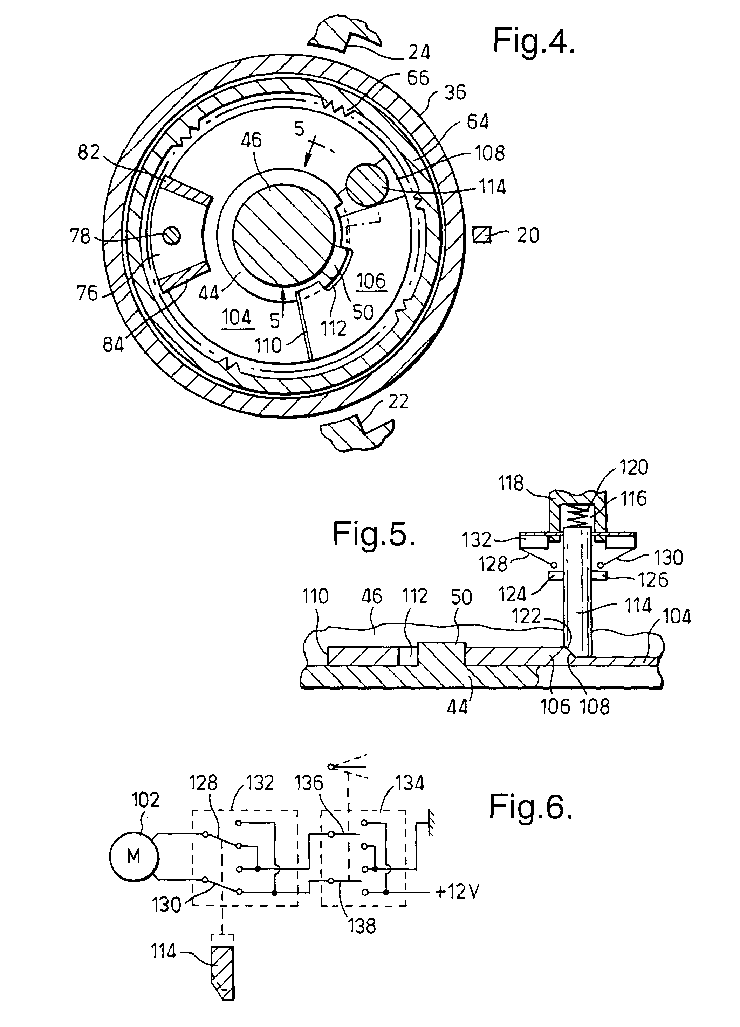

An annular gear wheel 64 is journalled on the lower cylindrical zone 42 of the centering bush. The gear wheel 64 has internal gear teeth 66 on its inner annular surface and has a bottom clutch face 68 which frictionally engages the clutch disc 34 on the support member 32 within the area surrounded by the annular clutch face of the clutch member 36. The internal gear teeth 66 are engaged by the lower pinion 70 of a double pinion gear 72 which projects through aligned openings 74 and 76 in the top of the clutch member 36 and the bottom of the drive housing body 28 respectively. The gear 72 is journalled on a shaft 78 which has a lower bearing 80 supported by legs 82 and 84 (see also Figure 4) which are formed integrally with the drive housing body 28 and project downwardly from opposite edges of the opening 76 therein, through the opening 74 in the clutch member 36. The upper end of the shaft 78 is supported in a bearing 86 formed integrally with the drive lid 30.

Within the housing of the drive unit 18, the gear 72 has an upper pinion 88 which is engaged by a lower pinion 90 of a pinion gear which is journalled on the pin 52 above the flange 54 and has an upper pinion 92 on its upper end. The upper end of the pin 52 is supported in a bearing 94 formed integrally with the lid 30. The pinion 92 is engaged by a lower pinion 96 of a double gear wheel which is journalled on the shaft 74 and has an upper helical gear 98 engaged by a worm gear 100 on the output shaft of an electric motor 102.

A cam disc 104 is journalled on the flange 44 of the centering bush. As can be seen from Figure 4, the upper surface of the cam disc 104 has a raised segment 106 which is joined to the rest of the upper surface by a cam ramp 108 at one end and a step 110 at the other. The raised segment 106 projects radially inwardly over the flange 44 and has an arcuate cut-out 112 on its inner annular wall of which receives the arcuate projection 50 so as to restrict the range of angular movement of the cam disc 104 relative to the support member 32.

The upper surface of the cam disc 104 is engaged by a piston 114 which is slidably mounted in a bore 116 in a raised zone 118 of the bottom of the drive housing body 28. The piston 114 is biassed downwardly by a compression spring 120. The piston 114 has a sloping face 122 on its bottom end which is inclined at the same angle as the ramp 108 on the cam disc 104.

The relative forces exerted by the compression spring 120 and the Belleville washers 56 and 60 and the relative areas of the annular clutch face of the clutch member 36 and of the clutch face 68 of the gear wheel 64 are chosen to be such that the force necessary to cause slippage between the clutch disc 34 and the annular gear wheel 64 is greater than the force necessary to cause slippage between the clutch disc 34 and the clutch element 36 but less than the force necessary to cause angular movement of the cam disc 104 to push the piston 114 up the ramp 10.

The piston 114 has lateral projections 124 and 126 which engage with respective microswitches 128 and 130 of a switch unit 132 which are mounted within the drive housing body 28. As can be seen from the circuit diagram in Figure 6, the microswitches 128 and 130 have changeover contacts which are connected to a manually operable 3-position switch unit 134 having ganged changeover contacts 136 and 138 which are spring-biassed into a central isolating position. The operating lever of the switch unit 134 can be displaced either upwardly or downwardly, as viewed in Figure 6, so as to apply a voltage to the motor 102 so as to cause it to rotate in either direction. The microswitches 128 and 130 are connected so as to reverse the polarity of the voltage applied to the motor 102 when the piston 114 is displaced upwardly by the ramp 10 on the cam disc 104.

When the mirror housing 16 is in its normal position, as shown in Figure 1, the sloping face 122 on the bottom of the piston 114 abuts against the ramp 108 on the cam disc 104 so as to hold the end of the arcuate cutout 112 near to the ramp 108 against the arcuate projection 50 on the centering sleeve, as shown in Figures 4 and 5. Since angular movement of the centering sleeve relative to the base member 10 is prevented by engagement of the square cross section bottom zone 38 of the former in the correspondingly shaped hole in the support member 32, the position of the tab 50 determines the normal driving position of the mirror housing 16 accurately. The settings of the electrical switches 132 and 134 are as shown in Figure 6.

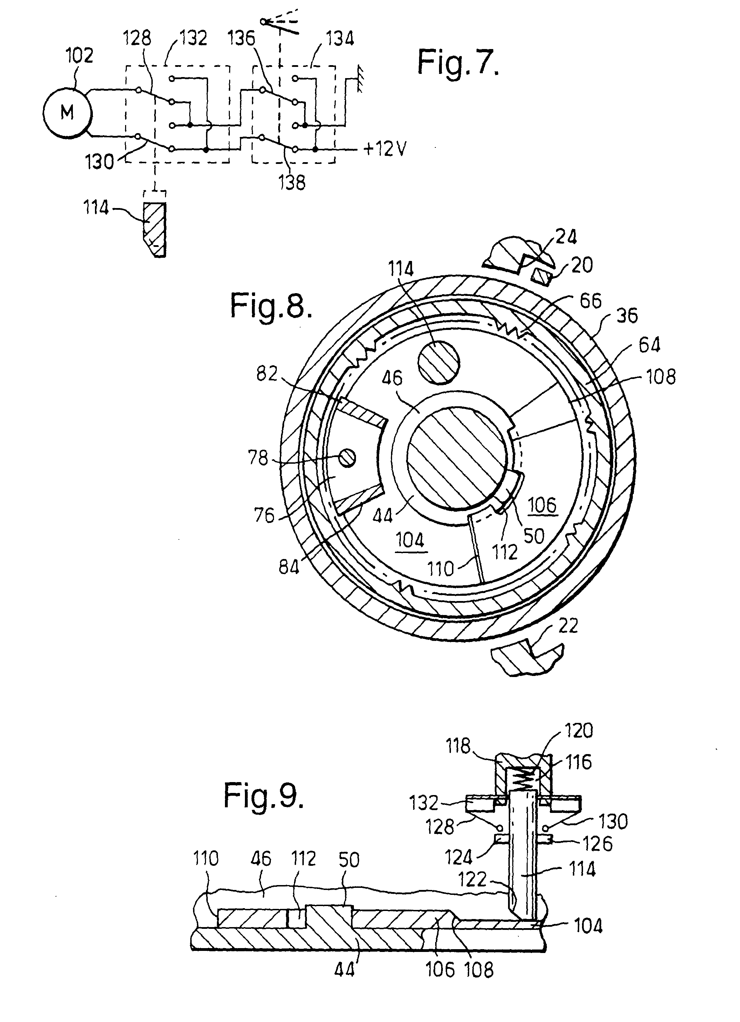

When it is desired to move the mirror housing 16 from its normal position to a parked position in which it is pivoted rearwardly so as to lie against the side of the vehicle body generally behind the base member 10, the switch unit 134 is operated as shown in Figure 7, so as to energise the motor 102 to cause clockwise rotation of the double pinion gear 72. Because the force necessary to cause slippage of the clutch element 36 relative to the clutch disc 34 is less than the force necessary to cause slippage of the annular gear wheel 64 relative to the clutch disc 34, the lower pinion 70 moves in a planetary fashion round the interior of the annular gear wheel 64, causing counter-clockwise annular movement of the drive unit 18 (and with it the mirror housing 16). This movement continues until the external finger 20 on the drive unit 18 comes into abutment with the front stop 24 on the base member 10 (Figures 8 and 9). Thereafter, slippage takes place between the clutch face 68 of the annular gear wheel 64 and the clutch disc 34, allowing the pinion 70 to continue to rotate until such time as the switch unit 34 is returned to its original condition as illustrated in Figure 6, in which the power supply to the motor 102 is disconnected.

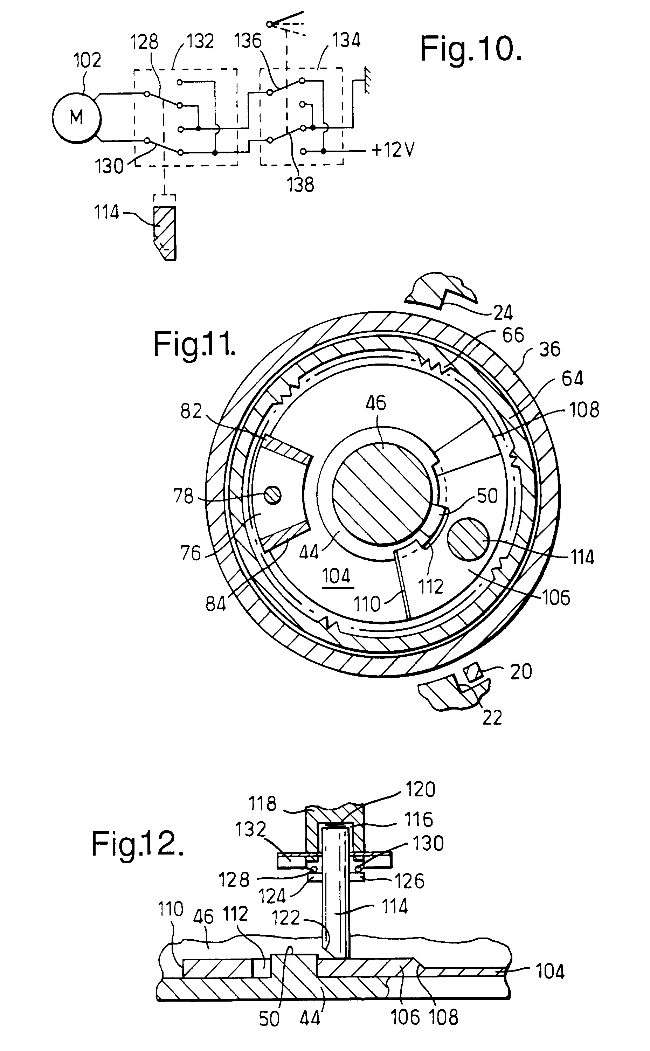

In order to restore the mirror housing 16 from its parked position to its normal driving position, the switch unit 134 is operated as shown in Figure 10 in order to apply power to the motor 102 with the opposite polarity. This causes counter-clockwise rotation of the pinion 70 so as to cause clockwise planetary movement relative to the annular gear wheel 64 and slippage between the clutch member 36 and the clutch plate 34. When the housing 16 reaches its normal driving position, further angular movement is blocked by abutment of the sloping face 122 of the piston 114 against the ramp 108 and of the arcuate cutout 112 against the projection 50, with the result that slippage takes place between the clutch face 68 of the annular gear wheel 64 and the clutch disc 34 until such time as the switch unit 134 is returned to its neutral condition illustrated in Figure 6.

If the mirror housing 16 is subject to impact from the front, it is displaced towards its parked position, simultaneous slippage taking place between the clutch disc 34 on the one hand and both the clutch element 36 and the clutch face 68 of the annular gear wheel 64 on the other, relative movement between the clutch element 35 and the annular gear wheel 64 being blocked by the worm gear 100. The mirror housing 16 can be restored to its normal driving position after such an impact in the same way as it is restored from its parked position.

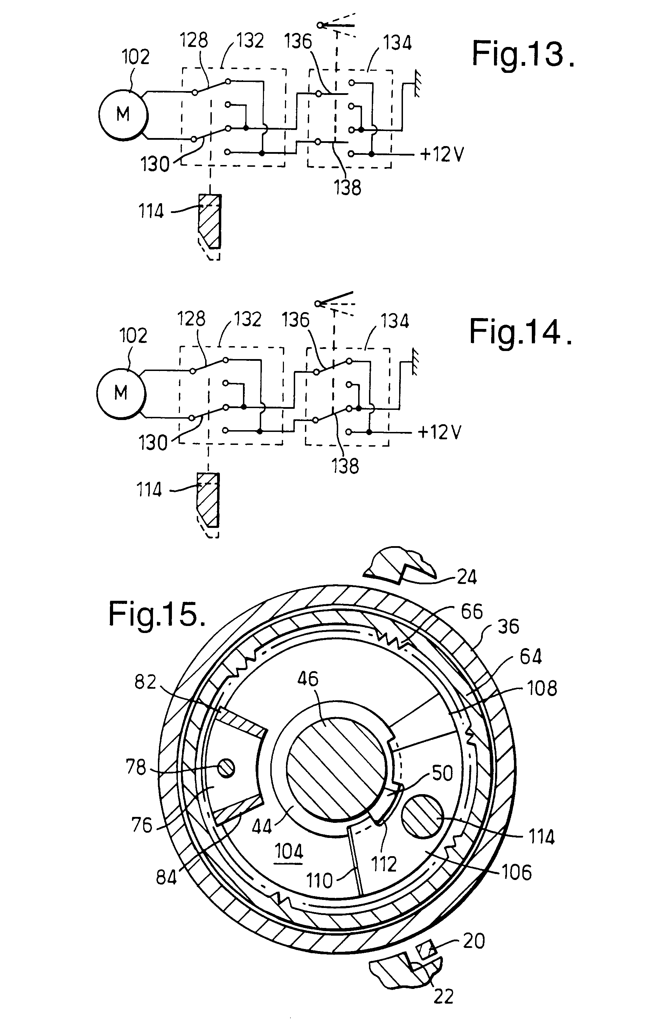

If the mirror housing 16 is displaced forwardly as the result of impact from the rear, simultaneous slippage takes place between the clutch disc 34 on the one hand and between both the clutch element 36 and the clutch face 68 of the gear wheel 64 on the other. In addition, the piston 114 is displaced upwardly by the ramp 108 on to the raised segment 106 of the cam disc 104, as shown in Figures 11 and 12. Consequently, the microswitches 128 and 130 of the switch unit 132 change state to reverse the polarity of the connections of the motor 102, as illustrated in Figure 13. Forward angular movement of the mirror housing 16 is limited by abutment of the external finger 20 with the stop 22.

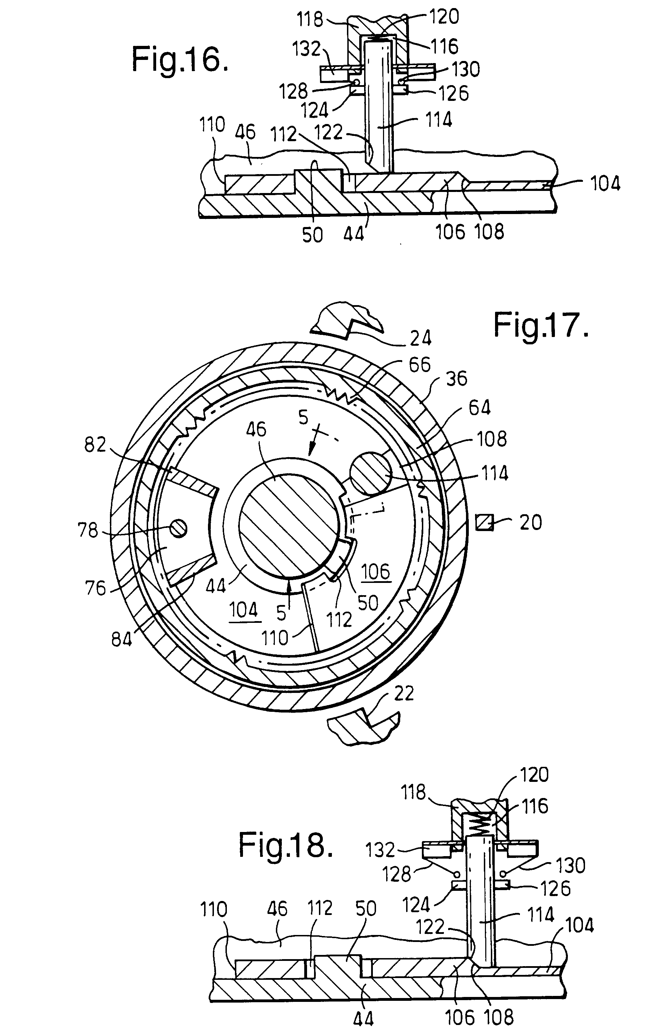

In order to restore the mirror housing from its forwardly displaced position to its normal driving position, the manual switch unit 134 is operated as shown in Figure 14. The effect is that the pinion 70 rotates in the clockwise direction, causing counter-clockwise planetary movement round the planetary gear wheel 64 causing slippage between the clutch disc 34 and the clutch element 36. During an initial part of this movement, friction between the raised segment 106 of the cam disc 104 and the bottom of the piston 114 causes counter-clockwise angular movement of the cam disc 104 to a position in which the arcuate projection 50 abuts against the end of the cutout 112 further from the ramp 108, as illustrated in Figures 15 and 16. Angular movement continues until the piston 114 reaches the top edge of the ramp 108, whereupon the interaction of the surfaces 108 and 122 displaces the cam disc 106 in a clockwise direction, with the result that the projection 50 is located in an intermediate position along the arcuate cutout 112, as shown in Figures 17 and 18. This causes the switch unit 132 to change state, reversing the direction of rotation of the motor 102 so that the mirror housing 16 is driven a short distance in the opposite direction to further displace the cam disc 106 so that the projection 50 comes into engagement with the end of the arcuate cutout 112 nearer to the ramp 108. The mirror housing 16 is now in its normal position shown in Figures 1 to 5, slippage taking place between the clutch disc 34 and the clutch face 68 of the gearwheel 64 until such time as the switch unit 134 is restored to its neutral position as shown in Figure 6.

It will be appreciated from the foregoing that, regardless of the direction of displacement, the same operation of the switch unit 134 is effective to cause restoration of the mirror housing 16 to its normal driving position. Consequently, the two end positions of this switch unit can be marked "park" and "drive", respectively. In addition, since the final movement of the mirror housing 16 to its normal driving position is always forwards, regardless of whether the original displacement had been forwards or rearwards, any slack in the mechanism due to manufacturing tolerances and/or wear of the various components is always taken up in the same way, with the result that restoration to the normal driving position is always carried out in a consistently repeatable manner.

## Claims

1. An exterior rearview mirror for a vehicle comprising a base member (10) adapted to be secured to a vehicle body, a mirror housing (16) mounted on the base member (10) for angular movement about a substantially vertical axis (52) between a position of normal use and a position in which the distance by which the mirror housing (16) projects from the vehicle body is reduced, means for holding the mirror housing (16) in its normal position, an electric motor (102) and transmission means powered by the electric motor (102) having two drive couplings (32, ) connected fast with the mirror housing (16) and the base member (10) respectively for causing relative angular movement therebetween, **characterised in that** a first one of said two drive couplings comprises a support member (32), a second one of said two drive couplings comprises a first driven member (36) connectable by first clutch means (35) to the support member (32), a second driven member (64) is connectable by second clutch means (68) to the support member (32), a resilient detent is (114) arranged to resist displacement of the first driven member (36) in a first direction from a predetermined orientation relative to the support member (32) corresponding to said position of normal use, and the electric motor (102) is coupled to drive means (70) operative to cause relative angular movement about said vertical axis (52) between the second driven member (64) and the first driven member (36), the force necessary to cause slippage of the second clutch means (68) being greater than the force necessary to cause slippage of the first clutch means (35) and less than the force necessary to disengage said resilient detent (114).

2. A rearview mirror according to claim 1, wherein a cam (104) is journalled on said support member (32) and has coupling means (50, 112) arranged to limit relative angular movement between the cam (104) and the support member (32), and the resilient detent comprises a cam follower (114) biased by a spring (120) into abutment with the cam (104) so as to abut against a ramp (108) thereon when the first driven member (36) is in said predetermined orientation relative to the support member (32), the detent disengaging when the cam follower (114) rides up said ramp (108).

3. A rearview mirror according to claim 2, wherein the electric motor (102) is electrically connected a power supply by a reversing switch (132) which is mechanically coupled to the cam follower (114) so that displacement of the cam follower (114) rides up said ramp (108) causes reversal of the direction of rotation of the motor (102).

4. A rearview mirror according to claim 1, 2 or 3, wherein a clutch disc (34) is secured to the support member (32), the first driven member comprises a hollow cylindrical member (36), the first clutch means (35) comprises an annular clutch face (35) at one end of the hollow cylindrical member (36) in abutment with the clutch disc (34), the second driven member comprises an annular gear wheel (64) located coaxially within the hollow cylindrical member (36), the second clutch means comprises a circular clutch face (68) on one end of the annular gear wheel (64) in abutment with the clutch disc (34), and the drive means comprises a pinion (70) journalled in bearings (80, 86) fast with the first driven member (36) and engaging with internal gear teeth (66) on an inner annular surface of the annular gear wheel (64).

5. A rearview mirror according to any preceding claim, wherein the reference means (42, 44, 46, 104) is fast with the base member (10) and the second driven member (64) is fast with the mirror housing (16).

## Patentansprüche

1. Außenrückblickspiegel für ein Fahrzeug, enthaltend ein Basisbauteil (10), das zur Befestigung an einer Fahrzeugkarosserie geeignet ist, ein an dem Basisbauteil (10) angebrachtes Spiegelgehäuse für eine Winkelbewegung um eine im wesentlichen vertikale Achse (52) zwischen einer Stellung normalen Gebrauchs und einer Stellung, in der die Strecke, um die das Spiegelgehäuse (16) von der Fahrzeugkarosserie vorsteht, vermindert ist, eine Einrichtung zum Halten des Spiegelgehäuses (16) in seiner normalen Position, einen Elektromotor (102) und eine von dem Elektromotor (102) angetriebene Übertragungseinrichtung mit zwei Kupplungen (32, ), die fest mit dem Spiegelgehäuse (16) und dem Basisbauteil (10) zum Bewirken einer relativen Winkelbewegung zwischen ihnen verbunden sind, **dadurch gekennzeichnet, daß** eine erste der beiden Antriebskupplungen ein Tragbauteil (32) enthält, eine zweite der beiden Antriebskupplungen ein erstes angetriebenes Bauteil (36) enthält, das mittels der ersten Kupplungseinrichtung (35) mit dem Tragbauteil (32) verbindbar ist, ein zweites angetriebenes Bauteil (64) mittels der zweiten Kupplungseinrichtung (68) mit dem Tragbauteil (32) verbindbar ist, ein elastisch nachgiebiges Sperrteil (114) angeordnet ist, um einer Verschiebung des ersten angetriebenen Bauteils (36) in einer ersten Richtung aus einer vorbestimmten Orientierung relativ zu dem Haltebauteil (32), die der besagten Position des normalen Gebrauchs entspricht, zu widerstehen, und der Elektromotor (102) mit der Antriebseinrichtung (70) gekuppelt ist, die wirksam ist, um eine relative Winkelbewegung um die vertikale Achse (52) zwischen dem zweiten angetriebenen Bauteil (64) und dem ersten angetriebenen Bauteil (36) zu bewirken, wobei die zum Verursachen eines Rutschens der zweiten Kupplungseinrichtung (68) notwendige Kraft größer ist als die zum Verursachen eines Rutschens der ersten Kupplungseinrichtung (35) erforderliche Kraft und kleiner als die zum Freigeben des elastisch nachgiebigen Sperrteils (114) notwendige Kraft.

2. Rückblickspiegel nach Anspruch 1, wobei auf dem Tragbauteil (32) ein Nocken (104) gelagert ist und eine Kupplungseinrichtung (50, 112) vorgesehen ist, um eine relative Winkelbewegung zwischen dem Nocken (104) und dem Tragbauteil (32) zu begrenzen, und das elastisch nachgiebige Sperrteil einen Nockenfolger (114) enthält, der von einer Feder (120) in Anlage an den Nocken (104) vorgespannt ist, so daß er gegen eine Rampe (108) daran anliegt, wenn das erste angetriebene Bauteil (36) in der vorbestimmten Orientierung relativ zu dem Tragbauteil (32) ist, wobei das Sperrteil freikommt, wenn der Nockenfolger (114) sich längs der Rampe (108) bewegt.

3. Rückblickspiegel nach Anspruch 2, wobei der Elektromotor (102) elektrisch über einen Umschalter (132) mit einer Stromquelle verbunden ist, welcher Umschalter mechanisch mit dem Nockenfolger (114) gekuppelt ist, so daß eine Verschiebung des Nockenfolgers (114) beim Bewegen längs der Rampe (108) eine Umkehr der Drehrichtung des Motors (102) bewirkt.

4. Rückblickspiegel nach Anspruch 1, 2 oder 3, wobei eine Kupplungsscheibe (34) an dem Tragbauteil (32) befestigt ist, das erste angetriebene Bauteil ein hohles zylindrisches Bauteil (36) enthält, die erste Kupplungseinrichtung (35) eine ringförmige Kupplungsfläche (35) an einem Ende des hohlen zylindrischen Bauteils (36) in Anlage mit der Kupplungsscheibe (34) enthält, das zweite angetriebene Bauteil ein ringförmiges Zahnrad (64) enthält, das koaxial innerhalb des hohlen zylindrischen Bauteils (36) angeordnet ist, die zweite Kupplungseinrichtung eine kreisförmige Kupplungsfläche (68) an einem Ende des ringförmigen Zahnrades (64) in Anlage mit der Kupplungsscheibe (34) enthält und die Antriebseinrichtung ein Ritzel (70) enthält, das in mit dem ersten angetriebenen Bauteil (36) festen Lagern (80, 86) gelagert ist und in eine Innenverzahnung (66) an einer inneren ringförmigen Fläche des ringförmigen Zahnrades (64) eingreift.

5. Rückblickspiegel nach einem der vorhergehenden Ansprüche, wobei die Bezugseinrichtung (42, 44, 46, 104) mit dem Basisbauteil (10) fest ist und das zweite angetriebene Bauteil (64) mit dem Spiegelgehäuse (16) fest ist.

## Revendications

1. Rétroviseur extérieur de véhicule comprenant un élément de base (10) apte à être fixé à une carrosserie de véhicule, un boîtier (16) de rétroviseur monté sur l'élément de base (10) pour un mouvement angulaire autour d'un axe sensiblement vertical (52) entre une position d'utilisation normale et une position dans laquelle la distance dont le boîtier de rétroviseur (16) fait saillie sur la carrosserie de véhicule est réduite, un moyen pour tenir le boîtier (16) de rétroviseur dans sa position normale, un moteur électrique (102) et un moyen de transmission actionné par le moteur électrique (102) pourvu de deux accouplements d'entraînement (32, ) solidaires respectivement du boîtier (16) de rétroviseur et du l'élément de base (10) pour provoquer un mouvement angulaire relatif entre eux, **caractérisé en ce que** le premier des deux accouplements d'entraînement comprend un élément de support (32), et le deuxième des accouplements d'entraînement comprend un premier élément d'entraînement (36) connectable par un premier moyen d'embrayage (35) à l'élément de support (32), un deuxième élément entraîné (64) connectable par un deuxième moyen d'embrayage (68) à l'élément de support (32), un positionneur élastique (114) disposé pour résister au déplacement du premier élément entraîné (36) dans un premier sens à partir d'une orientation prédéterminée relative à l'élément de support (32) correspondant à ladite position d'utilisation normale, et le moteur électrique (102) est accouplé au moyen d'entraînement (70) agissant pour provoquer un mouvement angulaire relatif autour dudit axe vertical (52) entre le deuxième élément entraîné (64) et le premier élément entraîné (36), la force nécessaire pour provoquer le glissement du deuxième moyen d'embrayage (68) étant supérieure à la force nécessaire pour provoquer le glissement du premier moyen d'embrayage (35) et inférieure à la force nécessaire pour libérer ledit positionneur élastique (114).

2. Rétroviseur selon la revendication 1, dans lequel une came (104) est montée avec des tourillons sur ledit élément de support (32) et comporte un moyen d'accouplement (50, 112) disposé pour limiter un mouvement angulaire relatif entre la came (104) et l'élément de support (32), et le positionneur élastique comprend une contre-came (114) préchargée par un ressort (120) pour venir en butée avec la came (104) de manière à buter contre une rampe (108) sur celle-ci lorsque le premier élément entraîné (36) est dans ladite orientation prédéterminée par rapport à l'élément de support (32), le positionneur se libérant lorsque la contre-came (114) s'appuie sur ladite rampe (108).

3. Rétroviseur selon la revendication 2, dans lequel le moteur électrique (102) est connecté électriquement à une alimentation électrique par un inverseur de marche (132) qui est accouplé mécaniquement à la contre-came (114) de telle manière que le déplacement de la contre-came (114) en appui sur ladite rampe (110) provoque l'inversion du sens de rotation du moteur (102).

4. Rétroviseur selon la revendication 1, 2 ou 3, dans lequel un disque d'embrayage (34) est fixé à l'élément de support (32), le premier élément entraîné comprend un élément cylindrique creux (36), le premier moyen d'embrayage (35) comprend une face (35) d'embrayage annulaire à une extrémité de l'élément cylindrique creux (36) en butée avec le disque d'embrayage (34), le deuxième élément entraîné comprend une roue d'engrenage annulaire (64) placée coaxialement à l'intérieur de l'élément cylindrique creux (36), le deuxième moyen d'embrayage comprend une face (68) d'embrayage circulaire sur une extrémité de la roue d'engrenage (64) en butée avec le disque d'embrayage (34), et le moyen d'entraînement comprend un pignon (70) tourillonnant dans des paliers (80, 86) solidaire du premier élément entraîné (36) et en prise avec des dents d'engrenage internes (66) sur une surface annulaire interne de la roue d'engrenage annulaire (64).

5. Rétroviseur selon l'une quelconque des revendications précédentes, dans lequel le moyen de référence (42, 44, 46, 104) est solidaire de l'élément de base (10) et le deuxième élément entraîné (64) est solidaire du boîtier (16) de rétroviseur.
